(19) **Europäisches Patentamt**
European Patent Office
Office européen des brevets

(11) **EP 1 603 282 B1**

(12) **EUROPÄISCHE PATENTSCHRIFT**

(45) Veröffentlichungstag und Bekanntmachung des Hinweises auf die Patenterteilung:
**24.09.2008 Patentblatt 2008/39**

(51) Int Cl.:
**H04L 12/40** *(2006.01)* **G06F 12/06** *(2006.01)*
**G06F 13/42** *(2006.01)*

(21) Anmeldenummer: **04013060.1**

(22) Anmeldetag: **03.06.2004**

(54) **Verfahren zur Adressierung der Teilnehmer eines Bussystems**

Method for addressing subscribers of a bus system

Procédé d'adressage des abonnés d'un système de bus

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**07.12.2005 Patentblatt 2005/49**

(73) Patentinhaber: **ELMOS Semiconductor AG**
**44227 Dortmund (DE)**

(72) Erfinder: **Hartzsch, Jörg**
**44287 Dortmund (DE)**

(74) Vertreter: **von Kreisler Selting Werner**
**Patentanwälte**
**P.O. Box 10 22 41**
**50462 Köln (DE)**

(56) Entgegenhaltungen:
**DE-A- 10 147 512** **DE-A- 19 940 700**
**US-A- 5 450 072**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Adressierung (einer beliebigen Anzahl) von Teilnehmern eines Bussystems mit einer Steuereinheit, einem von der Steuereinheit ausgehenden Bus und mehreren Teilnehmern, die aufeinander folgend an den Bus angeschlossen sind, als Weiterentwicklung des in DE 101 47 512 A1 vorgeschlagenen Verfahrens.

Um den Verdrahtungsaufwand beispielsweise im Kfz zu minimieren, geht man dazu über, die Steuersignale zum Ansteuern von Stellgliedern über einen Bus zu versenden, an dem neben einer Steuereinheit auch die Ansteuereinheiten für die Stellantriebsvorrichtungen der einzelnen Teilnehmer angeschlossen sind. Zu einem Bussystem zusammengefasst sind beispielsweise die Stellantriebsvorrichtungen einer Fahrzeug-Klimaanlage, der Fensterheber oder der vorderen Fahrzeugsitze. Damit die Steuereinheit selektiv ein oder mehrere Stellantriebe ansteuern kann, sind diesen Adressen zugeordnet. Bisher werden den Teilnehmern ihre Adressen z.B. durch Programmierung eingespeichert oder durch Steck- oder PIN-Kodierung zugeordnet. Während das Programmieren bei der Fertigung eines Fahrzeugs noch relativ unproblematisch ist, erfordert dies dann, wenn der gesamte Teilnehmer, das heißt die Stellantriebsvorrichtung mit Ansteuerung, beispielsweise in einer Werkstatt ausgetauscht wird, insoweit einen erhöhten Aufwand. Ferner besteht bezüglich der Logistik das Erfordernis der Einhaltung definierter Bestückungsreihenfolgen mit der damit verbundenen Serviceunfreundlichkeit bzw. der Lieferung vorprogrammierter (voradressierter) Bauteile, was dem Gleichteileprinzip zuwiderläuft. Außerdem kann es bei der Steckerkodierung zu Funktionsstörungen kommen. Schließlich ist es auch möglich, die Selbstadressierung der Teilnehmer eines Bussystems über Schalter zum seriellen Trennen der Bus-Verbindungen zwischen den Teilnehmern zu realisieren. Hier sind als Nachteile insbesondere die elektrische Auftrennung der Bus-Leitung über aktive Bauelemente und der hohe Flächenbedarf für Bussysteme mit vielen Teilnehmern zu nennen.

Automatisierte Adressvergabeverfahren für Bussysteme sind aus EP 0 854 609 A1, DE 196 47 668 A1, DE 44 04 962 C2, DE 44 28 502 A1, WO 97/45983 A1 und DE 197 56 564 A1 bekannt.

Aus DE 40 38 992 C2 schließlich ist ein Verfahren bekannt, bei dem die Adressen der Komponenten einer Gefahrenmeldeanlage automatisch zugeordnet werden. Die Adressierung erfolgt dabei ausgehend von dem zur Zentrale nächstgelegenen Teilnehmer bis zu dem von der Zentrale am entferntesten angeordneten Teilnehmer. Jeder Teilnehmer weist dabei in jeder der beiden Adern einer Meldeprimärleitung jeweils einen Widerstand und zwischen den beiden Adern mehrere elektrische und elektronische Bauteile auf. Ferner ist jeder Teilnehmer mit einem Kurzschlussschalter versehen, um die beiden Adern kurzzuschließen. Bei kurzgeschlossenem Schalter kann der sich über die beiden zuvor genannten Widerstände ergebende Spannungsabfall (bei Aufprägung eines Messstroms auf der Meldeprimärleitung) messtechnisch ermittelt werden. Sämtliche dieser Teilnehmer sind seriell in der Meldeprimärleitung angeordnet.

Zu Beginn der Adressierung sendet eine Zentralsteuereinheit ein Kurzschlusssignal zum Schließen der Kurzschlussschalter sämtlicher noch nicht adressierter Teilnehmer aus. Im Anschluss daran wird ein Messstrom aufgeprägt, der in dem von der Zentrale aus betrachtet ersten (also in dem zur Zentrale nächst angeordneten) Teilnehmer der Gruppe noch nicht adressierter Teilnehmer einen Spannungsabfall hervorrufen soll. Anschließend wird auf die Meldeprimärleitung ein Adressdatensignal gelegt. Derjenige Teilnehmer, dem noch keine Adresse zugeordnet worden ist und der zuvor einen Spannungsabfall detektiert hat, übernimmt dieses Adressdatensignal in seinen Adressspeicher. Anschließend erfolgt zur weiteren Adressierung wiederum die Vergabe des Kurzschlusssignals, wobei der Kurzschlussschalter des zuvor adressierten Teilnehmers nicht geschlossen wird, sondern vielmehr die Kurzschlussschalter sämtlicher bis dahin noch nicht adressierter Teilnehmer angesprochen werden. Beim Aufprägen des Messstroms erzeugt dieser dann in dem nunmehr zur Zentralsteuereinheit am nächsten angeordneten Teilnehmer der Gruppe aus noch nicht adressierten Teilnehmern einen zu detektierenden Spannungsabfall, so dass dieser Teilnehmer in der nächsten Phase, in der auf die Meldeprimärleitung wiederum ein Adressdatensignal gelegt wird, diese Adresse in seinem Adressspeicher abgelegt und somit ebenfalls adressiert ist. Dieses Verfahren wird fortgesetzt, bis der letzte Teilnehmer adressiert ist.

Bei diesem bekannten Verfahren wird idealisiert davon ausgegangen, dass auf Grund des Kurzschlusses der beiden Adern der Meldeprimärleitung der gesamte Messstrom über den Kurzschlussschalter des am nächsten zur Zentralsteuereinheit angeordneten Teilnehmers der Gruppe aus noch nicht adressierten Teilnehmern fließt. In der Praxis weisen elektronische Schalter, wie sie gemäß dem bekannten Verfahren als Kurzschlussschalter eingesetzt werden, jedoch einen nicht zu vernachlässigenden Ein-Widerstand auf. Mithin fließt also auch ein Teil des Messstroms über den Kurzschlussschalter des benachbarten noch nicht adressierten Teilnehmers und erzeugt über dessen Widerständen ebenfalls einen Spannungsabfall. Es ist also erforderlich, nicht nur den Umstand, dass ein Spannungsabfall detektiert ist, zu erfassen, sondern auch die Größe dieses Spannungsabfalls zu detektieren. Darüber hinaus ist zu bedenken, dass, je weiter ein noch nicht adressierter Teilnehmer von der Zentralsteuereinheit angeordnet ist, der Messstrom und damit der detektierbare Spannungsabfall sich verringert, was allein schon daran liegt, dass der Messstrom, der über den geschlossenen Kurzschlussschalter eines relativ weit von der Zentralsteuereinheit angeordneten Teilnehmers über die in den Adern der Meldeprimärleitung angeordneten Widerstände der diesem Teilnehmer vorgeschalteten, bereits adressierten Teilnehmer fließen muss. Die Auswertung und die zuverlässige Detektierung der Spannungsabfälle bei dem bekannten Verfahren ist also nicht trivial, was schaltungstechnischen und Programmieraufwand mit sich bringt.

In der deutschen Patentanmeldung DE 101 47 512 A1, von der im Oberbegriff der Ansprüche 1 und 4 ausgegangen wird, ist ein Verfahren vorgeschlagen worden, welches die zu DE 40 38 992 C2 dargelegten Probleme beseitigt. In einer bestimmten Ausführungsvariante ergibt sich jedoch bei diesen bekannten Verfahren das Problem von relativ hohen BUS-Strömen. Diese entstehen, wenn der Pullup 30 oder Pulldown 40 der Zentralsteuereinheit 14 niederohmlger ist, als der gemeinschaftliche Widerstand aller Schalter 26 aller Teilnehmer 1 bis 9. Obwohl in Fign. 1 bis 13 nicht gesondert dargestellt, ist in DE 40 38 992 C2 dieser Schalter 26 als schaltbarer Widerstand beschrieben. Auf dieser Tatsache beruht ja das bekannte Prinzip.

In der Praxis wird der Pullup bzw. Pulldown der Zentralsteuereinheit eine Strombegrenzung durch Stromquellenverhalten oder Widerstand aufweisen.

In den Fign. der DE 40 38 992 C2 ist der Pullup bzw. Pulldown als Widerstand dargestellt. Damit ergibt sich die Notwendigkeit, den Einzelstrom in jedem Teilnehmer kleiner zu dimensionieren, als den Wert der Strombegrenzung der Zentralsteuereinheit geteilt durch die Anzahl der Teilnehmer. Der zur Generierung eines Nutzsignals zur Verfügung stehende Messstrom ist damit erstens so klein, dass trotz hohen Aufwandes für Messtechnik nur mit störbehafteten Messungen zu rechnen ist. Zweitens ist dieser maximal nutzbare Messstrom abhängig von der Anzahl der Bus-Teilnehmer.

Der Erfindung liegt die Aufgabe zugrunde, ein Verfahren zur Adressierung der Teilnehmer eines Bussystems zu schaffen, bei dem die für die Adressierung erforderlichen Komponenten der Teilnehmer, wie die Stromdetektoren vereinfacht und damit kostengünstiger produzierbar sind.

Zur Lösung dieser Aufgabe wird mit der Erfindung ein Verfahren gemäß einem der selbständigen Ansprüche vorgeschlagen, wobei einzelne Ausführungsbeispiele in den Unteransprüchen angegeben sind.

Bei dem Verfahren zum Adressieren der Teilnehmer eines Bussystems legt die Zentralsteuereinheit die Busleitung gegen eine Seite der Betriebsspannung, während jeder Teilnehmer versucht, die Busleitung auf ein Referenzpotential, üblicherweise die Betriebsspannung, zu ziehen, wobei aufgrund des Stromquellenverhaltens des den Bus auf Betriebsspannung legenden Schalters durch einen dem Teilnehmer zugeordneten Detektor in der Busleitung ein Strom detektierbar ist. Wenn der Teilnehmer diesen Stromabfall detektiert, schaltet er seinen Schalter aus. Durch ein zeitlich definiertes langsames Zuschalten der geschalteten Stromquellen spielt sich dieser Vorgang innerhalb einer Gruppe von Teilnehmern sequenziell ab, bis der letzte Teilnehmer erreicht ist. Von dem diesem Teilnehmer zugeordneten Detektor wird in jedem Fall kein Strom detektiert, so dass nach Ablauf einer vorgebbaren Einschaltzeitspanne der Schalter dieses Teilnehmers noch geöffnet ist. Der Zustand "geöffneter Schalter" ergibt sich aus dem erstmaligen Ansprechen des Detektors, weshalb vorstehend und nachfolgend mit "geöffneter Schalter" gemeint ist, dass der Detektor angesprochen hat. Damit ist einer der Teilnehmer aus der Gruppe sämtlicher Teilnehmer spezifiziert, so dass diesem Teilnehmer nunmehr eine Adresse zuteil werden kann. Während weiterer Adressierzyklen wird nun auf die gleiche Weise mit den übrigen Teilnehmern verfahren, wobei der Schalter des bereits adressierten Teilnehmers stets offen bleibt.

Insbesondere ist bei dem erfindungsgemäßen Verfahren von Vorteil, dass der statische Summenstrom der steuerbaren Schalter sämtlicher Teilnehmer höher dimensioniert sein darf als derjenige Strom, den der Widerstand bzw. die Stromquelle der Zentralsteuereinheit liefern kann. Mit anderen Worten kann also der Strom durch einen steuerbaren Schalter größer sein als der über die Zentralsteuereinheit abfließende Strom geteilt durch die Anzahl der Teilnehmer. Es gilt also

$$I(27) > I(30) / n,$$

wobei I(27) der Strom durch den steuerbaren Schalter, I(30) der Strom durch den Widerstand oder die Stromquelle und n die Anzahl an Teilnehmern ist (siehe die beiliegenden Fign.).

Dadurch wird das für die Adressierung zu verwendende Nutzsignal, nämlich die durch die Detektoren zu erkennenden Ströme größer. Demzufolge lassen sich die Detektoren selbst günstiger produzieren, da sie nicht so sensibel sein müssen. Ferner wird die Störempfindlichkeit des erfindungsgemäßen Adressierverfahrens verbessert.

Dadurch, dass gemäß der Erfindung der am Verfahren beteiligte Widerstand durch einen für die Buskommunikation notwendigen Schalter gebildet ist, der steuerbar ist, ist zur Realisierung des erfindungsgemäßen Verfahrens gegenüber einem normalen Bus kein zusätzliches Bauteil erforderlich, was den Aufwand bezüglich der Implementierung des Verfahrens in einem bestehenden Bussystem vereinfacht.

Wird dem Shunt-Widerstand ein Analog/Digital-Wandler nachgeschaltet und als Komparator ein Digitalkomparator verwendet, so lässt sich die Schwelle applikationsabhängig und abhängig von Betriebsbedingungen wie beispielsweise Versorgungsspannung, Temperatur und Anzahl der Teilnehmer parametrisieren.

Das erfindungsgemäße Verfahren braucht nicht auf sämtliche Teilnehmer des Bussystems angewendet zu werden. Auch können sich die Teilnehmer, auf die es angewendet wird, an beliebiger Stelle/Stellen des Bussystems befinden. Mit anderen Worten kann das Bussystem an beliebiger Stelle/Stellen Teilnehmer aufweisen, die sich nicht am erfindungsgemäßen Adressiervorgang beteiligen, diesen dann aber auch nicht stören. Diese Teilnehmer können dann auf eine andere als die erfindungsgemäße Art adressiert werden.

In vorteilhafter Weiterbildung der Erfindung ist ferner vorgesehen, dass die Module der Zentralsteuereinheit wahlweise einzeln oder zusammen bzw. doppelt, nämlich einmal pro Busanschluss ausgelegt sind, wodurch beide Seiten der Busleitung zu Analysezwecken oder im Fehlerfall (beispielsweise offener Steckerkontakt) durch die Zentraleinheit bedienbar sind.

Diverse Bussysteme, deren Teilnehmer sich erfindungsgemäß adressieren lassen, sind in den Zeichnungen wiedergegeben. Dabei zeigen im einzelnen

Fig. 1 einen Aufbau eines vier Teilnehmer aufweisenden Bussystems zur Adressvergabe mit diversen optionalen Zusatzmodulen, wobei die zur Bus-Kommunikation erforderlichen Komparatoren nicht dargestellt sind, da sie die Adressvergabe nicht betreffen,

Fig. 2 einen Aufbau des gleichen Systems wie in Fig. 1, jedoch bei umgekehrter Polung von VDD1 und VDD2 zur Veranschaulichung des Umstandes, dass die Polung von VDD1 und VDD2 nicht ausschlaggebend ist, wobei beide Varianten durch Spiegelung an der x-Achse ineinander überführbar sind und lediglich ein Teilnehmer dargestellt ist,

Fig. 3 einen Aufbau eines Bussystems zur Adressvergabe bei Nutzung der gleichen Strukturen für Kommunikation und Adressvergabe, wobei lediglich ein Teilnehmer dargestellt ist,

Fig. 4 einen Aufbau des gleichen Systems wie in Fig. 3, jedoch bei umgekehrter Polung,

Fig. 5 einen Aufbau eines Bussystems zur Adressvergabe mit paralleler Anordnung der Stromdetektoren unter Verwendung einer zusätzlichen Leitung, wobei zwei Teilnehmer dargestellt sind,

Fig. 6 ein Bussystem wie in Fig. 5, jedoch bei umgekehrter Polung,

Fig. 7 einen Aufbau eines Bussystems zur Adressvergabe unter Ausnutzung einer Versorgungsleitung zur Stromdetektion, und

Fig. 8 einen Aufbau des gleichen Systems wie in Fig. 7, jedoch bei umgekehrter Polung.

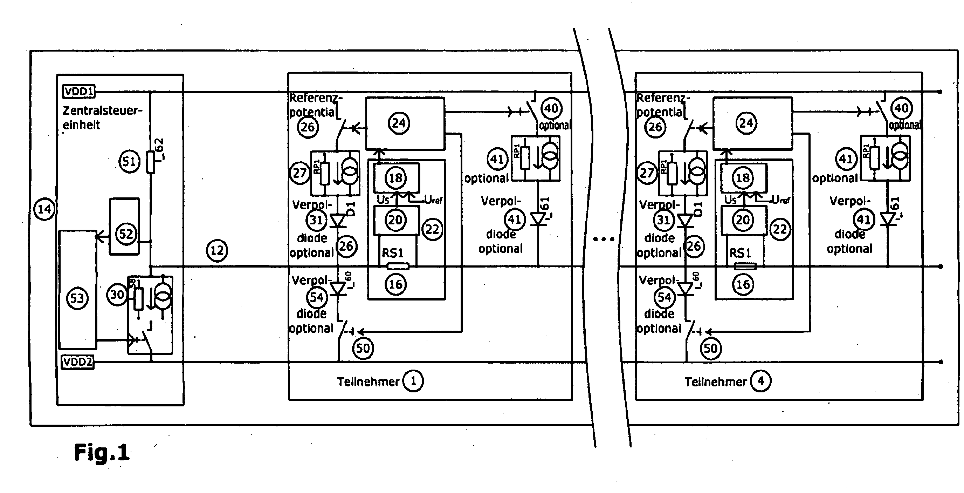

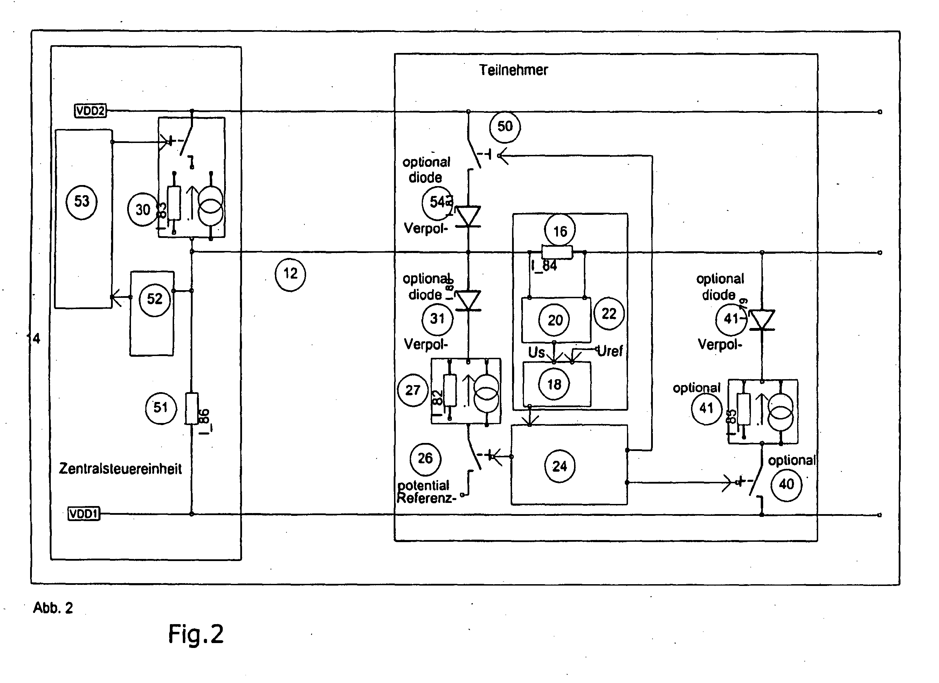

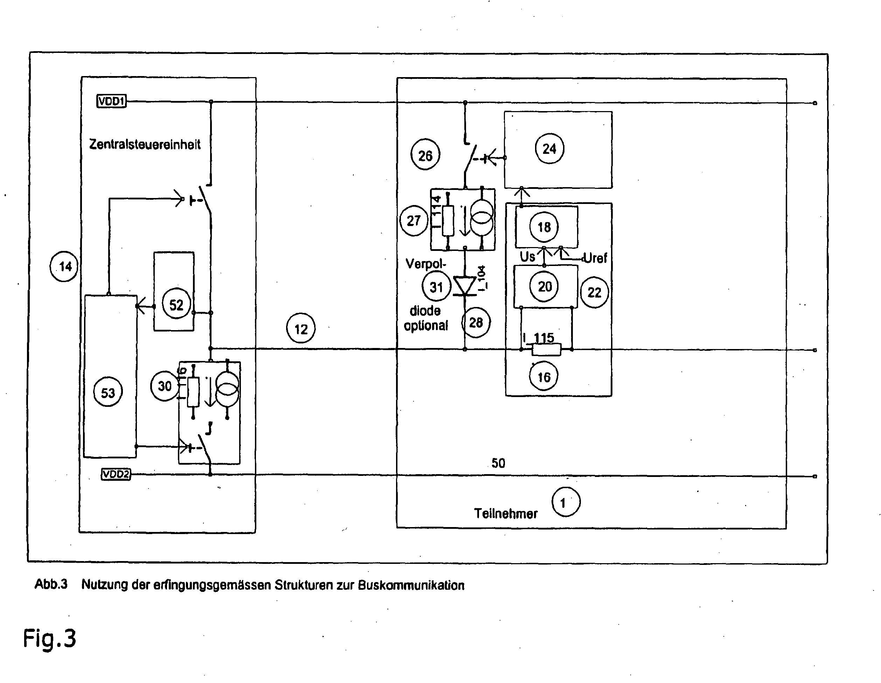

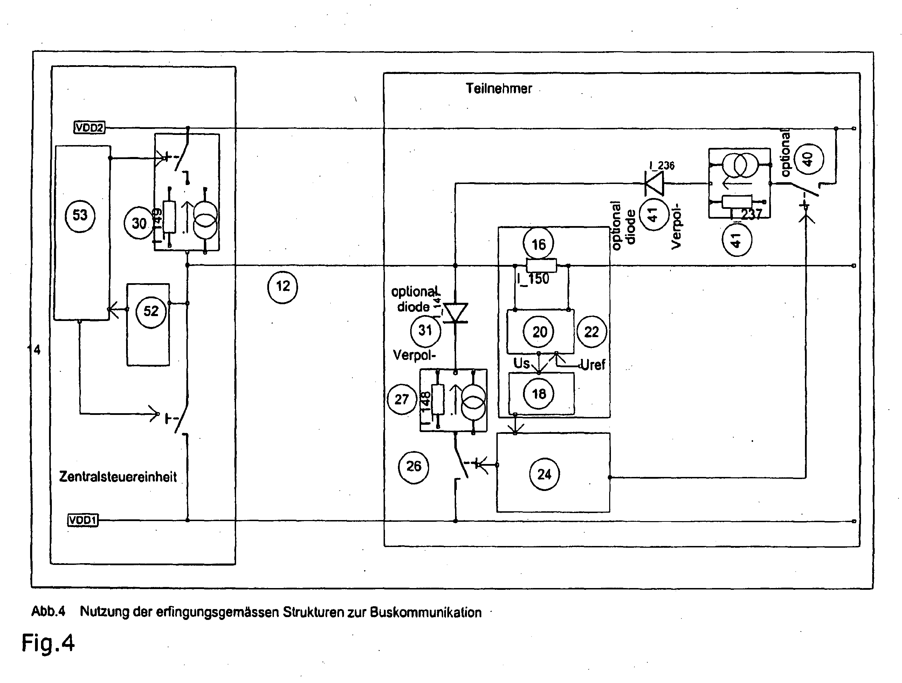

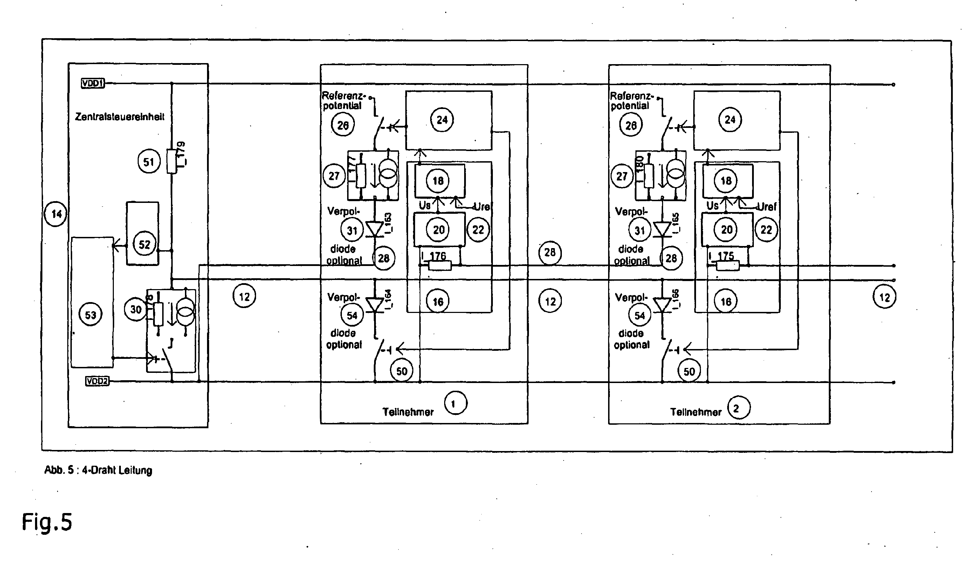

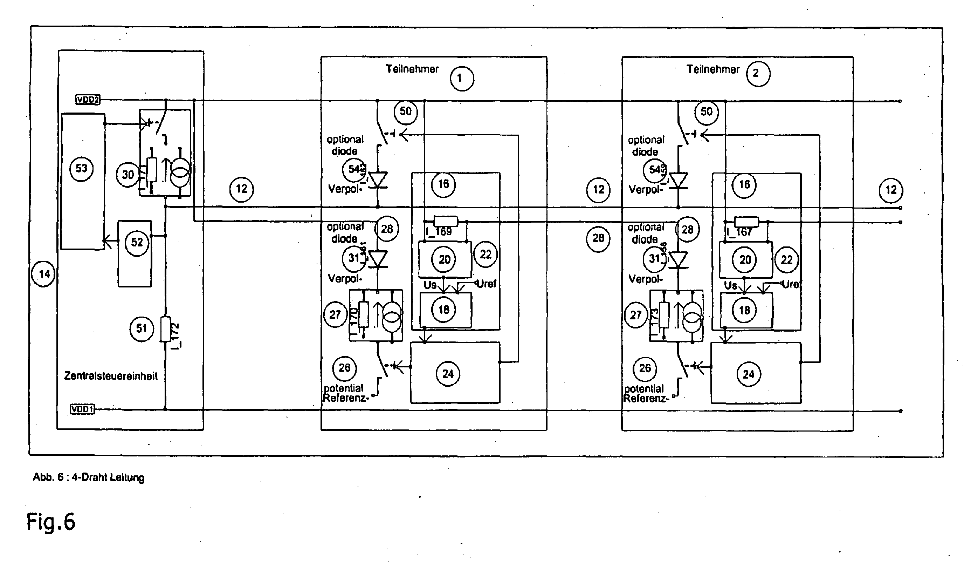

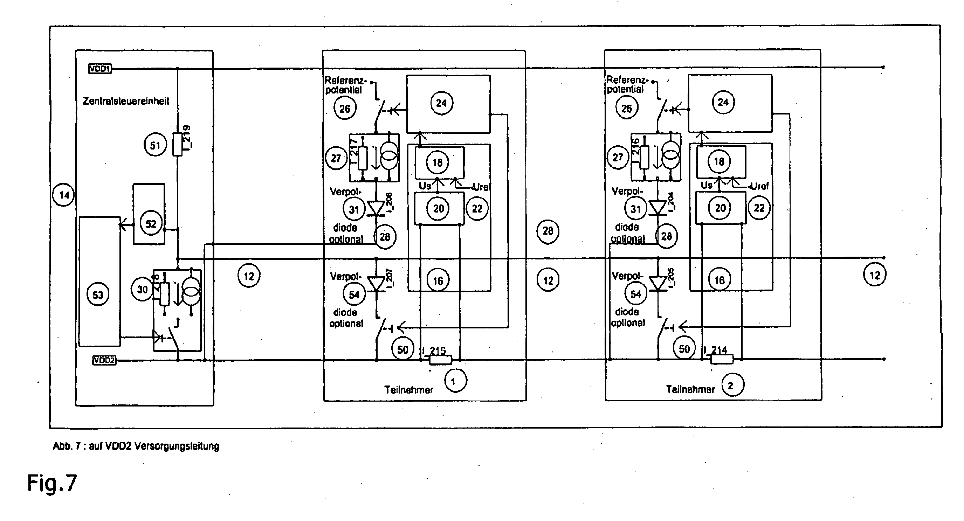

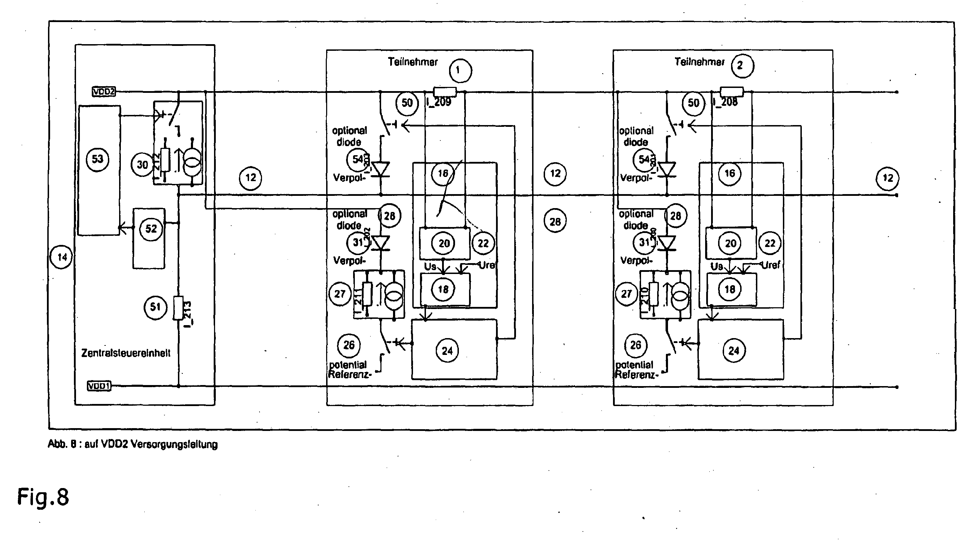

Ganz allgemein gilt für die in den Fign. 1 bis 8 gezeigten Bussystemen, dass eine Zentralsteuereinheit 14 die Busleitung 12 bei der erfindungsgemäßen Adressierung der Teilnehmer 1 bis 4 gegen eine Seite der Betriebsspannung VDD2 legt, während jeder Teilnehmer 1 bis 4 versucht, die Busleitung 12 auf ein Referenzpotential, üblicherweise die Betriebsspannung VDD1, zu ziehen, wobei auf Grund des Stromquellenverhaltnes 27 des den Bus auf Betriebsspannung legenden Schalters 26 durch einen dem Teilnehmer 1 bis 4 zugeordneten Detektor 22 in der Busleitung 12 ein Strom detektierbar ist. Wenn der Teilnehmer mit seiner Ansteuereinheit 24 diesen Stromabfall detektiert, schaltet er seinen Schalter 26 aus. Durch ein zeitlich definiertes langsames Zuschalten der geschalteten Stromquellen spielt sich dieser Vorgang innerhalb einer Gruppe von Teilnehmern 1 bis 4 sequenziell ab, bis der letzte Teilnehmer erreicht ist. Von dem diesem Teilnehmer 4 zugeordneten Detektor 22 wird in jedem Fall kein Strom detektiert, so dass nach Ablauf einer vorgebbaren Einschaltzeitspanne der Schalter 26 dieses Teilnehmers 1 bis 4 noch geöffnet ist. Damit ist einer der Teilnehmer aus der Gruppe sämtlicher Teilnehmer 1 bis 4 spezifiziert, so dass diesem Teilnehmer nunmehr eine Adresse zuteil werden kann. Während weiterer Adressierzyklen wird nun auf die gleiche Weise mit den übrigen Teilnehmern verfahren, wobei der Schalter des bereits adressierten Teilnehmers 4 stets offen bleibt.

**BEZUGSZEICHEN**

| 14 | Zentralsteuereinheit mit |
| | 51 Pullup-Widerstand |
| | 52 Komparator für BUS-Betrieb |
| | 53 Ansteuerung der physikalischen BUS-Schnittstelle |
| | 30 Treiber für BUS-Betrieb: Schalter mit resistivem oder Strom-quellenverhalten |
| 1 bis 4 | Teilnehmer mit |
| | 50 für die Buskommunikation notwendiger Schalter |
| | 22 Stromdetektoren mit |
| | 16 Shunt-Widerstand |
| | 18 Komparator |
| | 20 Vorverstärker |
| | 24 Steuereinheit |
| | 26 Schalter eines jeden Teilnehmers zur Einprägung eines Messstroms |
| | 27 Widerstands- oder Stromquellenverhalten des Schalters 26 |
| | 28 Verbindungsleitung, die von der Busleitung 12 abzweigt |
| 40,41 | schaltbarer BUS-Pullup (optionale Zusatzmodule) |
| 31,41,54 | Verpolschutzdioden (optionale Zusatzmodule) |

**Patentansprüche**

1. Verfahren zum Adressieren der Teilnehmer eines Bussystems, das versehen ist mit

 a) einer Zentralsteuereinheit (14),

 b) einer von der Zentralsteuereinheit (14) ausgehenden Busleitung (12) und

 c) mehreren mit der Busleitung (12) verbundenen Teilnehmern (1 bis 4), von denen jeder einen Detektor (22) zum Detektieren eines Stromflusses zwischen diesem Teilnehmer (1 bis 4) und einem zu diesem nächst benachbarten sowie weiter von der Zentralsteuereinheit (14) beabstandeten Teilnehmer (1 bis 4), einen steuerbaren Schalter (26) zum Aufbau einer Verbindung der Busleitung (12) mit einem Referenzpotential, eine Ansteuereinheit (24) zum Ein- und Ausschalten des Schalters (26) unter anderem auf der Basis des Ausgangssignal des Detektors (22) und einen Adressspeicher aufweist, wobei ferner

 d) pro Teilnehmer (1 bis 4) der steuerbare Schalter (26) zusätzlich zu einem für die Buskommunikation notwendigen Schalter (50) im System integriert ist,

 e) ein am Verfahren beteiligter Widerstand (30) der Zentralsteuereinheit (14) zusätzlich zu einem für die Buskommunikation notwendigen weiteren Widerstand (51), der in der Zentralsteuereinheit (14) angeordnet sein kann, im System integriert ist,

 f) der am Verfahren beteiligte Widerstand (30) durch einen für die Buskommunikation notwendigen Schalter gebildet wird, der steuerbar ist,

 g) der steuerbare Schalter (26) jedes Teilnehmers (1 bis 4) einen definierten, bei allen Teilnehmern (1 bis 4) annähernd gleichen Widerstand (27) oder annähernd gleiches Stromquellenverhalten (27) aufweist,

 wobei bei dem Verfahren

 h) von der Zentralsteuereinheit (14) in einer ersten Phase auf die Busleitung (12) ein Schließsignal zum zeitlich begrenzten Schließen der Schalter (26) sämtlicher Teilnehmer (1 bis 4) der Gruppe noch nicht adressierter Teilnehmer (1 bis 4) für eine vorgebbare Einschaltzeitspanne (T) gelegt wird,

 i) in einer zweiten Phase durch die Detektoren (22) ermittelt wird, ob zwischen jeweils benachbarten Teilnehmern (1 bis 4) ein Strom fließt oder nicht, wobei

 $j_1$) innerhalb dieser zweiten Phase mit Ausnahme des am weitesten von der Zentralsteuereinheit (14) entfernt angeordneten Teilnehmers (4) der Gruppe der noch nicht adressierten Teilnehmern (1 bis 4) die Detektoren (22) sämtlicher noch nicht adressierter Teilnehmer (1 bis 4) einen Stromfluss zum jeweils weiter von der Zentralsteuereinheit (14) entfernt angeordneten, nächst benachbarten Teilnehmer (1 bis 4) detektieren,

 $j_2$) die Schalter (26) sämtlicher noch nicht adressierter Teilnehmer (1 bis 4) geöffnet werden und

 k) der Detektor (22) des am weitesten von der Zentralsteuereinheit (14) entfernt angeordneten Teilnehmers (4) der Gruppe der noch nicht adressierten Teilnehmer (1 bis 4) während der Einschaltzeitspanne (T) einen Stromfluss zu einem weiter von der Zentralsteuereinheit (14) angeordneten, nächst benachbarten Teilnehmer (1 bis 4) nicht detektiert, wobei der Schalter (26) dieses noch nicht adressierten Teilnehmers (4) bei Ablauf der Einschaltzeitspanne (T) immer noch geschlossen ist und erst nach Ablauf der Einschaltzeitspanne (T) geöffnet wird, und

 l) von der Zentralsteuereinheit (14) in einer dritten Phase ein Adressdatensignal auf die Busleitung (12) gelegt wird, wobei dieses Adressdatensignal in den Adressspeicher desjenigen Teilnehmers (4) aus der Gruppe der noch nicht adressierten Teilnehmer (1 bis 4) abgelegt wird, dessen Schalter (26) auf Grund des Ablaufs der Einschaltzeit (T) in den geöffneten Zustand übergangen ist, und dieser Teilnehmer (1 bis 4) somit adressiert wird,

 m) die Aktivierung der steuerbaren Schalter (26,27) aller Teilnehmer (1 bis 4) zeitgleich vorgenommen wird,

 n) die Aktivierung der steuerbaren Schalter (26,27) aller Teilnehmer (1 bis 4) zu einem relativ langsamen Ansteigen der Ströme in den strombestimmenden Elementen der steuerbaren Schalter (26,27) führt, wobei auch der Summenstrom auf der Leitung (12) ansteigt,

 o) die Deaktivierung der steuerbaren Schalter (26,27) aller Teilnehmer (1 bis 4) durch das Ansprechen des Detektors (22) direkt oder zeitverzögert initiiert wird, wobei sich der Summenstrom aller Teilnehmer (1 bis 4) durch Fehlen der Last dieses Teilnehmers (1 bis 4) reduziert, und

 p) diese Deaktivierungsvorgänge als Kettenreaktion beginnend mit dem der Zentralsteuereinheit (14) nächst benachbarten Teilnehmer (1) ablaufen,

 **dadurch gekennzeichnet, dass**

 q) der Summenstrom auf der Leitung (12) sich durch Aufsteuern der steuerbaren Schalter (26,27) erhöht, gleichzeitig aber durch die von den Detektoren (22) ausgelösten Deaktivierungsvorgänge treppenstufenartig reduziert wird, wodurch der Summenstrom limitiert bleibt,
r) wobei die Stromtragfähigkeit des am Verfahren beteiligten Widerstandes oder Stromquelle (30) der Zentralsteuereinheit (14) immer größer ist als die Summe der Momentanströme der steuerbaren Schalter (26,27) aller Teilnehmer (1 bis 4) und die steuerbaren Schalter (26,27) aller Teilnehmer in der Lage bleiben, die vorgesehenen Ströme einzuprägen.

2. Verfahren nach Anspruch 1, **dadurch gekennzeichnet, dass** die Adressierung sämtlicher Teilnehmer (1 bis 4) der Gruppe der noch nicht adressierten Teilnehmer (1 bis 4) in mehreren Adresszyklen erfolgt.

3. Verfahren nach Anspruch 2, **dadurch gekennzeichnet, dass** die Einschaltzeitdauer (T) von Adresszyklus zu Adresszyklus verringert wird.

4. Verfahren zum Adressieren der Teilnehmer eines Bussystems, das versehen ist mit

    a) einer Busleitung (12)
    b) mehreren mit der Busleitung (12) verbundenen Teilnehmern (1 bis 4), von denen jeder einen Detektor (22) zum Detektieren eines Stromflusses zwischen diesem Teilnehmer (1 bis 4) und dem zu diesem nächst benachbarten Teilnehmer (1 bis 4), einen steuerbaren Schalter (26) zum Aufbau einer Verbindung der Busleitung (12) mit einem Referenzpotential, eine Ansteuereinheit (24) zum Ein- und Ausschalten des Schalters (26) unter anderem auf der Basis des Ausgangssignals des Detektors (22) und einen Adressspeicher aufweist,
    wobei ferner
    c) pro Teilnehmer (1 bis 4) der steuerbare Schalter (26) zusätzlich zu einem für die Buskommunikation notwendigen Schalter (50) im System integriert ist,
    d) ein am Verfahren beteiligter Widerstand (30) einer Zentralsteuereinheit (14) zusätzlich zu einem für die Buskommunikation notwendigen weiteren Widerstand (51), der in der Zentralsteuereinheit (14) angeordnet sein kann, im System integriert ist,
    e) der am Verfahren beteiligte Widerstand (30) durch einen für die Buskommunikation notwendigen Schalter gebildet wird, der steuerbar ist,
    f) der steuerbare Schalter (26) jedes Teilnehmers (1 bis 4) einen definierten, bei allen Teilnehmern (1 bis 4) annähernd gleichen Widerstand (27) oder annähernd gleiches Stromquellenverhalten (27) aufweist,
    wobei bei dem Verfahren

    g) die Ansteuereinheiten (24) sämtlicher Teilnehmer (1 bis 4) der Gruppe noch nicht adressierter Teilnehmer (1 bis 4) die Schalter (26) für eine vorgebbare Einschaltzeitspanne (T) einschalten,
    h) innerhalb der Einschaltzeitspanne (T) die Schalter (26) derjenigen Teilnehmer (1 bis 4) geöffnet werden, deren Detektoren (22) einen Stromfluss zu dem jeweils benachbarten Teilnehmer (1 bis 4) detektieren,
    i) wobei der Schalter (26) einer der Teilnehmer (1 bis 4) bei Ablauf der Einschaltzeitspanne (T) noch geöffnet ist und
    j) wobei in dem Adressspeicher dieses Teilnehmers (1 bis 4) eine Adresse abgelegt wird und dieser Teilnehmer (1 bis 4) somit adressiert wird,
    k) die Aktivierung der steuerbaren Schalter (26,27) aller Teilnehmer (1 bis 4) zeitgleich vorgenommen wird,
    l) die Aktivierung der steuerbaren Schalter (26,27) aller Teilnehmer (1 bis 4) zu einem Ansteigen der Ströme in den strombestimmenden Elementen (27) der steuerbaren Schalter (26,27) führt, wobei auch der Summenstrom auf der Leitung (12) ansteigt,
    m) die Deaktivierung der steuerbaren Schalter (26,27) aller Teilnehmer (1 bis 4) durch das Ansprechen des Detektors (22) direkt oder zeitverzögert initiiert wird, wobei sich der Summenstrom aller Teilnehmer (1 bis 4) durch Fehlen der Last dieses Teilnehmers (1 bis 4) reduziert, und
    n) dieser Deaktivierungsvorgang als Kettenreaktion beginnend mit dem der Zentralsteuereinheit (14) nächst benachbarten Teilnehmer (1) abläuft,
    **dadurch gekennzeichnet, dass**
    o) der Summenstrom auf der Leitung (12) sich durch Aufsteuern der steuerbaren Schalter (26,27) erhöht, gleichzeitig aber durch die von den Detektoren (22) ausgelösten Deaktivierungsvorgänge treppenstufenartig reduziert wird, wodurch der Summenstrom limitiert bleibt,
    p) wobei die Stromtragfähigkeit des am Verfahren beteiligten Widerstandes oder Stromquelle (30) der Zentralsteuereinheit (14) immer größer ist als die Summe der Momentanströme der steuerbaren Schalter (26,27) aller Teilnehmer (1 bis 4) und die steuerbaren Schalter (26,27) aller Teilnehmer in der Lage bleiben, die vorgesehenen Ströme einzuprägen.

5. Verfahren nach einem der Ansprüche 1 bis 4, **dadurch gekennzeichnet, dass** mit der Busleitung (12) ein oder mehrere Zentralsteuereinheiten (14) verbunden sind und dass mindestens eine dieser Zentralsteuereinheiten (14) das Schließen der Schalter (26) sämtlicher Teilnehmer (1 bis 4) der Gruppe noch nicht adressierter Teilnehmer (1 bis 4) initiiert.

6. Verfahren nach einem der Ansprüche 1 bis 5, **dadurch gekennzeichnet, dass** die Ansteuereinheiten (24) sämtlicher Teilnehmer (1 bis 4) zur Synchronisation des Schließens die Schalter (26) für die Dauer der Einschaltzeitspanne (T) die Schalter (26) sämtlicher Teilnehmer (1 bis 4) innerhalb einer vorgebbaren Zeitspanne (T1) schließen und anschließend wieder öffnen, wobei das Öffnen des letzten Schalters (26) erkannt wird und dieser Zeitpunkt der Synchronisationszeitpunkt (T2) ist und wobei nach Ablauf einer weiteren Zeitspanne (T3) alle Schalter (26) für die Dauer der Einschaltzeitspanne (T) synchronisiert geschlossen werden.

7. Verfahren nach einem der Ansprüche 1 bis 6, **dadurch gekennzeichnet, dass** die Detektoren (22) in Reihe in der Busleitung (12) geschaltet sind und dass der Schalter (26) eines jeden Teilnehmers (1 bis 4) in einer Verbindungsleitung (28) angeordnet ist, die von der Zentralsteuereinheit (14) aus betrachtet vor dem Detektor (22) dieses Teilnehmers (1 bis 4) von der Busleitung (12) abzweigt.

8. Verfahren nach einem der Ansprüche 1 bis 7, **dadurch gekennzeichnet, dass** sämtliche Teilnehmer (1 bis 4) mit Ausnahme des am weitesten von der Zentralsteuereinheit (14) entfernt an der Busleitung (12) angeschlossenen Teilnehmers (1 bis 4) jeweils einen Detektor (22) aufweisen.

9. Verfahren nach einem der Ansprüche 1 bis 8, **dadurch gekennzeichnet, dass** jeder Detektor (22) einen Shunt-Widerstand (16) und einen Komparator (18) zum Vergleich des Spannungsabfalls ($U_s$) über den Shunt-Widerstand mit einem Referenzwert ($V_{ref}$) aufweist.

10. Verfahren nach Anspruch 9, **dadurch gekennzeichnet, dass** dem Komparator (18) ein Vorverstärker (20) zum Verstärken des Spannungsabfalls ($U_s$) vorgeschaltet ist.

11. Verfahren nach Anspruch 9 oder 10, **dadurch gekennzeichnet, dass** dem Shunt-Widerstand (16) ein Analog/Digital-Wandler nachgeschaltet ist.

12. Verfahren nach Anspruch 11, **dadurch gekennzeichnet, dass** der Komparator ein Digital-Komparator ist.

13. Verfahren nach einem der Ansprüche 9 bis 12, **dadurch gekennzeichnet, dass** der Shunt-Widerstand (16) in der Leitung (12) integriert ist, wobei im jeweiligen Teilnehmer (1 bis 4) lediglich noch die Detektion des Spannungsabfalls erfolgt.

14. Verfahren nach einem der Ansprüche 9 bis 12, **dadurch gekennzeichnet, dass** der Shunt-Widerstand (16) in jedem Teilnehmer (1 bis 4) integriert ist und die Stromdetektion vollständig in jedem Teilnehmer (1 bis 4) erfolgt.

15. Verfahren nach einem der Ansprüche 9 bis 12, **dadurch gekennzeichnet, dass** der Shunt-Widerstand in einer Steckverbindung zwischen Busleitung (12) und Teilnehmer (1 bis 4) integriert ist und weder in der Leitung noch innerhalb der Teilnehmer (1 bis 4) Aufwand für einen Widerstand (16) entsteht.

16. Verfahren nach einem der Ansprüche 9 bis 11, **dadurch gekennzeichnet, dass** der Shunt-Widerstand innerhalb jedes Teilnehmers (1 bis 4) in einem schon vorhandenen Halbleiterbaustein integriert ist.

17. Verfahren nach einem der Ansprüche 9 bis 12, **dadurch gekennzeichnet, dass** der Shunt-Widerstand (16) innerhalb jedes Teilnehmers (1 bis 4) in einem schon vorhandenen Halbleiterbaustein integriert ist und durch innere Verdrahtung gebildet wird.

18. Verfahren nach einem der Ansprüche 1 bis 12, **dadurch gekennzeichnet, dass** bei Bussystemen, bei denen jeder Teilnehmer (1 bis 4) einen zusätzlichen Pullup oder Pulldown (41) in Form eines Widerstandes oder einer Stromquelle enthält, dieser zur Adressierung durch die Ansteuereinheit (24) per Schalter (40) deaktiviert werden kann.

19. Verfahren nach einem der Ansprüche 1 bis 12, **dadurch gekennzeichnet, dass** Verpolschutzdioden (31,41,54) in einzelne oder alle Teilnehmer (1 bis 4) eingebracht werden.

20. Verfahren nach einem der Ansprüche 1 bis 12, **dadurch gekennzeichnet, dass** das Bussystem an beliebiger Stelle/Stellen Teilnehmer aufweist, welche sich nicht am Adressierungsvorgang beteiligen.

21. Verfahren nach einem der Ansprüche 1 bis 12, **dadurch gekennzeichnet, dass** die Busleitung (12) mittels einer Rückführungsleitung beidseitig der Zentralsteuereinheit (12) zugeführt wird.

22. Verfahren nach Anspruch 21, **dadurch gekennzeichnet, dass** die Module (51,52,30) der Zentralsteuereinheit (14) wahlweise doppelt ausgelegt sind, so dass beide Seiten der Busleitung (12) zu Analysezwecken oder im Fehlerfall durch die Zentralsteuereinheit (14) bedient werden können.

23. Verfahren nach Anspruch 21, **dadurch gekennzeichnet, dass** von der Rückführungsleitung des Hauptkabelstranges eine Verbindung zur Busleitung (12) genau eines Nebenkabelstranges hergestellt wird, wobei alle Teilnehmer im Nebenkabelstrang elektrisch gesehen von Seite der Zentralsteuerseite aus hinter dem letzten Teilnehmer des Hauptkabelstranges liegen.

24. Verfahren nach Anspruch 21 und 23, **dadurch gekennzeichnet, dass** auch der Nebenkabelstrang eine Rückführungsleitung besitzt, und eine Verbindung zur Busleitung (12) genau eines weiter untergeordneten Nebenkabelstranges hergestellt wird, wobei das Verfahren beliebig fortgesetzt werden kann und sich baumartige Kabelbäume trotz sequenzieller elektrischer Anordnung der Teilnehmer aufbauen lassen.

25. Verfahren nach einem der Ansprüche 1 bis 24, **dadurch gekennzeichnet, dass** das Referenzpotential für den Schalter (26) jedes Teilnehmers dessen Versorgungsspannung (VDD1) ist.

26. Verfahren nach einem der Ansprüche 1 bis 25, **dadurch gekennzeichnet, dass** das Verfahren nicht auf der Busleitung (12), sondern auf einer speziell zur Adressierung vorgesehenen Leitung durchgeführt wird.

27. Verfahren nach einem der Ansprüche 1 bis 25, **dadurch gekennzeichnet, dass** das Verfahren nicht auf der Busleitung (12), sondern auf einer die Versorgungsspannung (VDD2) führenden Leitung durchgeführt wird, demzufolge in der Zentralsteuereinheit (14) der Widerstand bzw. die Stromquellen (30) durch eine leitende Verbindung ersetzt werden kann.

28. Verfahren nach einem der Ansprüche 1 bis 27, **dadurch gekennzeichnet, dass** die Polarität zwischen den Versorgungsspannungen (VDD1,VDD2) führenden Leitungen beliebig ist.

29. Verfahren nach einem der Ansprüche 1 bis 28, **dadurch gekennzeichnet, dass** das Verfahren auf einem Draht eines Mehrdraht Bussystems angewandt wird.

30. Verfahren nach einem der Ansprüche 1 bis 29, **dadurch gekennzeichnet, dass** das Verfahren auf Mehrdraht Bussystemen angewandt wird, und die steuerbaren Schalter (26) sowie die strombestimmenden Elemente (27) jedes Teilnehmers (14) nicht am Referenzpotential sondern an einer zweiten Busleitung angebunden sind, wobei bei dem Verfahren die Zentralsteuereinheit diese zweite Busleitung über einen strombegrenzten Schalter oder einen geschalteten Widerstand auf ein Referenzpotential, VDD1, legt.

31. Verfahren nach Anspruch 30, **dadurch gekenn-**

zeichnet, dass beide verwendeten Busleitungen mit Stromdetektoren (22) versehen und ausgewertet werden.

32. Verfahren nach einem der Ansprüche 1 bis 31, **dadurch gekennzeichnet, dass** die zur Buskommunikation notwendigen Strukturen in den Teilnehmern genutzt werden, um das Adressierungsverfahren durchzuführen,

33. Verfahren nach einem der Ansprüche 1 bis 32, **dadurch gekennzeichnet, dass** bei Bussystemen, bei denen jeder Teilnehmer (1 bis 4) einen zusätzlichen Pullup oder Pulldown (41) in Form eines Widerstandes oder einer Stromquelle enthält, dieser zur Adressierung durch die Ansteuereinheit (24) per Schalter (40) deaktiviert werden kann.

34. Verfahren nach einem der Ansprüche 1 bis 33, **dadurch gekennzeichnet, dass** Verpolschutzdioden (31,41,54) in einzelne oder alle Teilnehmer (1 bis 4) eingebracht werden.

**Claims**

1. Method for addressing of the participants of a bus system which comprises

   a) a central control unit (14),
   b) a bus line (12) starting from the central control unit (14), and
   c) a plurality of participants (1 to 4) connected with the bus line (12), each participant comprising a detector (22) for detecting a current flow between this participant (1 to 4) and a participant (1 to 4) located closest to this participant and farther away from the central control unit (14), a controllable switch (26) for establishing a connection of the bus line (12) with a reference potential, a drive unit (24) for switching on and off the switch (26), *inter alia* on the basis of the output signal of the detector (22), and an address memory,
   wherein, further
   d) for each participant (1 to 4) the controllable switch (26), in addition to a switch (50) required for bus communication, is integrated in the system,
   e) a resistor (30) of the central control unit (14) partaking in the method, in addition to another resistor (51) required for bus communication which may be arranged in the central control unit (14), is integrated in the system,
   f) the resistor (30) partaking in the method is defined by a switch required for bus communication, said switch being controllable,
   g) the controllable switch (26) of each participant (1 to 4) has a defined resistance (27) or current source behaviour (27), which is approximately identical for all participants (1 to 4),
wherein, in said method
h) in a first phase the central control unit (14) applies to the bus line (12) a closing signal for time-limited closing of the switches (26) of all participants (1 to 4) of the group of participants (1 to 4) not addressed so far for a predeterminable on-period (T),
i) in a second phase the detectors (22) determine whether between respective adjacent participants (1 to 4) a current flows or does not flow, wherein

$j_1$) in said second phase, with the exception of that participant (4) of the group of participants (1 to 4) not addressed so far which is arranged farthest away from the central control unit (14), the detectors (22) of all participants (1 to 4) not addressed so far detect a current flow to the respective participant (1 to 4) arranged farther away from the central control unit (14) and closest to the respective participant,
$j_2$) the switches (26) of all participants (1 to 4) not addressed so far are opened, and
k) the detector (22) of that participant (4) of the group of participants (1 to 4) not addressed so far, which is arranged farthest away from the central control unit (14), does, during the on-period (T), not detect a current flow to a participant (1 to 4) arranged farther away from the central control unit (14) and closest to the respective participant, and the switch (26) of this participant (4) not addressed so far is still closed upon elapse of the on-period (T) and is opened only after elapse of the on-period (T), and

l) in a third phase the central control unit (14) applies an address data signal to the bus line (12), wherein said address data signal is stored in the address memory of that participant (4) of the group of participants (1 to 4) not addressed so far whose switch (26) has changed into the open state since the on-period (T) has elapsed, this participant (1 to 4) thus being addressed,
m) activation of the controllable switches (26,27) of all participants (1 to 4) is effected simultaneously,
n) activation of the controllable switches (26,27) of all participants (1 to 4) leads to a relatively slow rise of the currents in the current-determining elements of the controllable switches (26,27), as a result of which the sum current on the line (12) rises,
o) deactivation of the controllable switches (26,27) of all participants (1 to 4) is initiated directly or with a time delay by the response of the detector (22), as a result of which the sum current of all participants (1 to 4) is reduced due to the lack of the load of this participant (1 to 4),
p) these deactivation processes takes place as a chain reaction starting with the participant (1) located closest to the central control unit (14), **characterized in that**
q) the sum current on the line (12) rises due to the energizing of the controllable switches (26,27), but, at the same time, is stepwise reduced due to the deactivation processes triggered by the detectors (22), as a result of which the sum current remains limited,
r) whereby the current-carrying capacity of the resistor or current source (30) of the central control unit (14) partaking in the method is always larger than the sum of the instantaneous currents of the controllable switches (26,27) of all participants (1 to 4), and the controllable switches (26,27) of all participants remain capable of impressing the provided currents.

2. Method according to claim 1, **characterized in that** for all participants (1 to 4) of the group of participants (1 to 4) not addressed so far addressing takes place in a plurality of addressing cycles.

3. Method according to claim 2, **characterized in that** the on-period (T) is reduced from address cycle to address cycle.

4. Method for addressing the participants of a bus system which comprises

a) a bus line (12),
b) a plurality of participants (1 to 4) connected with the bus line (12), each participant comprising a detector (22) for detecting a current flow between this participant (1 to 4) and the participant (1 to 4) located closest to this participant, a controllable switch (26) for establishing a connection of the bus line (12) with a reference potential, a drive unit (24) for switching on and off the switch (26), *inter alia* on the basis of the output signal of the detector (22), and an address memory,
wherein, further
c) for each participant (1 to 4) the controllable switch (26), in addition to a switch (50) required for bus communication, is integrated in the system,
d) a resistor (30) of a central control unit (14) partaking in the method, in addition to another resistor (51) required for bus communication which may be arranged in the central control unit (14), is integrated in the system,

e) the resistor (30) partaking in the method is defined by a switch required for bus communication, said switch being controllable,

f) the controllable switch (26) of each participant (1 to 4) has a defined resistance (27) or current source behaviour (27), which is approximately identical for all participants (1 to 4),

wherein, in said method

g) the drive units (24) of all participants (1 to 4) of the group of participants (1 to 4) not addressed so far switch on the switches (26) for a predeterminable on-period (T),

h) within the on-period (T) the switches (26) of those participants (1 to 4) are opened whose detectors (22) detect a current flow to the respective adjacent participant (1 to 4),

i) wherein the switch (26) of one of the participants (1 to 4) is still open upon elapse of the on-period (T), and

j) wherein an address is placed into the address memory of this participant (1 to 4), this participant (1 to 4) thus being addressed,

k) activation of the controllable switches (26,27) of all participants (1 to 4) is effected simultaneously,

l) activation of the controllable switches (26,27) of all participants (1 to 4) leads to a rise of the currents in the current-determining elements (27) of the controllable switches (26,27), as a result of which also the sum current on the line (12) rises,

m) deactivation of the controllable switches (26,27) of all participants (1 to 4) is initiated directly or with a time delay by the response of the detector (22), as a result of which the sum current of all participants (1 to 4) is reduced due to the lack of the load of this participant (1 to 4),

n) this deactivation process takes place as a chain reaction starting with the participant (1) located closest to the central control unit (14), **characterized in that**

o) the sum current on the line (12) rises due to the energizing of the controllable switches (26,27), but, at the same time, is stepwise reduced due to the deactivation processes triggered by the detectors (22), as a result of which the sum current remains limited,

p) whereby the current-carrying capacity of the resistor or current source (30) of the central control unit (14) partaking in the method is always larger than the sum of the instantaneous currents of the controllable switches (26,27) of all participants (1 to 4), and the controllable switches (26,27) of all participants remain capable of impressing the currents provided by the invention.

5. Method according to one of claims 1 to 4, **charac-**

**terized in that** the bus line (12) has connected thereto one or a plurality of central control units (14), and that at least one of these central control units (14) initiates closing of the switches (26) of all participants (1 to 4) of the group of participants (1 to 4) not addressed so far.

6. Method according to any one of claims 1 to 5, **characterized in that** the drive units (24) of all participants (1 to 4), for the purpose of synchronizing the closing process of the switches (26) for the duration of the on-period (T), close the switches (26) of all participants (1 to 4) within a predeterminable period (T1) and then open them again, wherein opening of the last switch (26) is recognized and this point of time is the synchronization time (T2), wherein, after elapse of another period (T3), all switches (26) are closed in a synchronized manner for the duration of the on-period (T).

7. Method according to any one of claims 1 to 6, **characterized in that** the detectors (22) are connected in series in the bus line (12), and that the switch (26) of each participant (1 to 4) is arranged in a connecting line (28) which branches off the bus line (12) before the detector (22) of this participant (1 to 4) as seen from the central control unit (14).

8. Method according to any one of claims 1 to 7, **characterized in that** all participants (1 to 4) except for the participant (1 to 4) which at a site farthest away from the central control unit (14) is connected to the bus line (12), comprise a respective detector (22).

9. Method according to one of claims 1 to 8, **characterized in that** each detector (22) comprises a shunt resistor (16) and a comparator (18) for comparing the voltage drop ($U_s$) across the shunt resistor with a reference value ($V_{ref}$).

10. Method according to claim 9, **characterized in that** a preamplifier (20) for amplifying the voltage drop ($U_s$) is arranged before the comparator (18).

11. Method according to claim 9 or 10, **characterized in that** an analogdigital converter is arranged behind the shunt resistor (16).

12. Method according to claim 11, **characterized in that** the comparator is a digital comparator.

13. Method according to one of claims 9 to 12, **characterized in that** the shunt resistor (16) is integrated in the line (12), as a result of which in the respective participant (1 to 4) only the detection of the voltage drop takes place.

14. Method according to one of claims 9 to 12, **charac-**

**terized in that** the shunt resistor (16) is integrated in each participant (1 to 4), as a result of which the complete current detection takes place in each participant (1 to 4).

15. Method according to one of claims 9 to 12, **characterized in that** the shunt resistor is integrated in a plug connection between the bus line (12) and the participant (1 to 4), and neither in the line nor in the participant (1 to 4) any expenditure for a resistor (16) is necessary.

16. Method according to one of claims 9 to 11, **characterized in that** the shunt resistor in each participant (1 to 4) is integrated in an existing semiconductor component.

17. Method according to one of claims 9 to 12, **characterized in that** the shunt resistor (16) in each participant (1 to 4) is integrated in an existing semiconductor component and is defined by internal wiring.

18. Method according to one of claims 1 to 12, **characterized in that** in bus systems in which each participant (1 to 4) includes an additional pull-up or pull-down (41) in the form of a resistor or a current source, said participant is adapted to be deactivated by a switch (40) for the purpose of being addressed by the drive unit (24).

19. Method according to one of claims 1 to 12, **characterized in that** inverse-polarity protection diodes (31,41,54) are arranged in individual or all participants (1 to 4).

20. Method according to one of claims 1 to 12, **characterized in that** the bus system comprises at any place/places participants which do not partake in the addressing process but do no disturb said process.

21. Method according to one of claims 1 to 12, **characterized in that** the bus line (12) is routed via a return line to both sides of the central control unit (14).

22. Method according to claim 21, **characterized in that** the modules (51, 52,30) of the central control unit (14) are optionally provided twice, as a result of which both ends of the bus line (12) can be operated by the central control unit (14) for analysis purposes or in the case of malfunction.

23. Method according to claim 21, **characterized in that** the return line of the main cable line establishes a connection with the bus line (12) of exactly one sub-cable line, as a result of which all participants in the sub-cable line are located behind the last participant of the main cable line as seen, from the electrical point of view, from the side of the central control unit.

24. Method according to claim 21 and 23, **characterized in that** also the sub-cable line is provided with a return line, and a connection with the bus line (12) of exactly one further subordinate sub-cable line can be established, as a result of which the method can be continued in any way desired, and tree-like cable harnesses can be built up despite the sequential electrical arrangement of the participants.

25. Method according to one of claims 1 to 24, **characterized in that** the reference potential for the switch (26) of each participant is the supply voltage (VDD1) of said participant.

26. Method according to one of claims 1 to 25, **characterized in that** the method is not carried out on the bus line (12) but on a line dedicated for addressing purposes.

27. Method according to one of claims 1 to 25, **characterized in that** the method is not carried out on the bus line (12) but on a line carrying the supply voltage (VDD2), as a result of which in the central control unit (14), the resistor and/or the current source (30) can be substituted by a conducting connection.

28. Method according to one of claims 1 to 27, **characterized in that** the polarity between the lines carrying the supply voltages (VDD1,VDD2) is arbitrary.

29. Method according to one of claims 1 to 28, **characterized in that** the method is applied to a wire of a multi-wire bus system.

30. Method according to one of claims 1 to 29, **characterized in that** the method is applied to multi-wire bus systems, and the controllable switches (26) and the current-determining elements (27) of each participant (14) are not connected to the reference potential but to a second bus line, wherein in the method the central control unit places this second bus line to a reference potential VDD1 via a current-limiting switch or a switched resistor.

31. Method according to claim 30, **characterized in that** both bus lines employed are provided with current detectors (22) and are evaluated.

32. Method according to any one of claims 1 to 31, **characterized in that** the structures required for bus communication in the participants are employed for carrying out the addressing process.

33. Method according to one of claims 1 to 32, **characterized in that** in bus systems in which each participant (1 to 4) comprises an additional pull-up or pull-down (41) in the form of a resistor or a current source, said participant is adapted to be deactivated by a switch (40) for the purpose of being addressed by the drive unit (24).

34. Method according to one of claims 1 to 33, **characterized in that** inverse-polarity protection diodes (31,41,54) are arranged in individual or all participants.


**Revendications**

1. Procédé d'adressage des abonnés d'un système de bus qui comprend :

   a) une unité de commande centrale (14),
   b) une ligne de bus (12) partant de l'unité de commande centrale (14), et
   c) plusieurs abonnés (1 à 4) reliés à la ligne de bus (12), dont chacun présente un détecteur (22) pour détecter une circulation du courant entre cet abonné (1 à 4) et un abonné (1 à 4) directement adjacent à celui-ci et plus éloigné de l'unité de commande centrale (14), un commutateur commandable (26) pour établir une connexion de la ligne de bus (12) avec un potentiel de référence, une unité de commande (24) pour mise sous tension et hors tension du commutateur (26), entre autres sur la base du signal de sortie du détecteur (22), et une mémoire d'adresse,
   dans lequel, en outre,
   d) pour chaque abonné (1 à 4), le commutateur commandable (26), en plus d'un commutateur (50) nécessaire à la communication de bus, est intégré dans le système,
   e) une résistance (30) de l'unité de commande centrale (14), intervenant dans le procédé, en plus d'une autre résistance (51) nécessaire à la communication de bus, qui peut être disposée dans l'unité de commande centrale (14), est intégrée dans le système,
   f) la résistance (30) intervenant dans le procédé est formée par un commutateur nécessaire à la communication de bus, lequel peut être commandé,
   g) le commutateur commandable (26) de chaque abonné (1 à 4) présente une résistance (27) définie, pratiquement identique ou un comportement de source de courant (27) pratiquement identique pour tous les abonnés (1 à 4), procédé dans lequel
   h) lors d'une première phase, l'unité de commande centrale (14) applique à la ligne de bus (12) un signal de fermeture pour la fermeture limitée dans le temps des commutateurs (26) de tous les abonnés (1 à 4) du groupe d'abonnés (1 à 4) non encore adressés pour une période de mise sous tension (T) prédéterminable,

   i) lors d'une deuxième phase, les détecteurs (22) déterminent si un courant passe ou non entre des abonnés (1 à 4) voisins respectifs,

   j1) dans cette seconde phase, à l'exception de l'abonné (4) le plus éloigné de l'unité de commande centrale (14) du groupe des abonnés (1 à 4) non encore adressés, les détecteurs (22) de tous les abonnés (1 à 4) non encore adressés détectent une circulation de courant vers l'abonné (1 à 4) directement adjacent à et respectivement plus éloigné de l'unité de commande centrale (14),
   j2) les commutateurs (26) de tous les abonnés (1 à 4) non encore adressés sont ouverts, et

   k) le détecteur (22) de l'abonné (4) le plus éloigné de l'unité de commande centrale (14) du groupe des abonnés (1 à 4) non encore adressés ne détecte pas, pendant la période de mise sous tension (T), une circulation de courant vers un abonné (1 à 4) directement adjacent et plus éloigné de l'unité de commande centrale, le commutateur (26) de cet abonné (4) non encore adressé restant fermé pendant que s'écoule la période de mise sous tension (T) et ne s'ouvre qu'après écoulement de la période de mise sous tension (T), et
   l) l'unité de commande centrale (14), lors d'une troisième phase, applique à la ligne de bus (12) un signal de données d'adresse, ce signal de données d'adresse étant stocké dans la mémoire d'adresses de l'abonné (4) du groupe des abonnés (1 à 4) non encore adressés, dont le commutateur (26), du fait de l'expiration de la période de mise sous tension (T), est passé à l'état ouvert, et cet abonné (1 à 4) étant ainsi adressé,
   m) l'activation des commutateurs commandables (26, 27) de tous les abonnés (1 à 4) est réalisée simultanément,
   n) l'activation des commutateurs commandables (26, 27) de tous les abonnés (1 à 4) conduit à une montée relativement lente des courants dans les éléments déterminant le courant des commutateurs commandables, le courant total sur la ligne (12) augmentant également,
   o) la désactivation des commutateurs commandables (26, 27) de tous les abonnés (1 à 4) est initiée directement ou avec temporisation par la réponse du détecteur (22), le courant total de tous les abonnés (1 à 4) étant réduit par l'absence de charge de cet abonné (1 à 4), et
   p) ces processus de désactivation se déroulant sous forme de réaction en chaîne en commençant par l'abonné (1) directement adjacent à l'unité de commande centrale (14),

**caractérisé en ce que**

q) le courant total sur la ligne (12) augmente du fait de l'excitation des commutateurs commandables (26, 27), mais est en même temps réduit graduellement par les processus de désactivation déclenchés par les détecteurs (22), le courant total restant ainsi limité,

r) l'intensité de courant maximale admissible de la résistance ou source de courant (30), intervenant dans le procédé, de l'unité centrale de commande (14) est toujours plus élevée que la somme des courants instantanés des commutateurs commandables (26, 27) de tous les abonnés (1 à 4) et les commutateurs commandables (26, 27) de tous les abonnés restent en mesure d'appliquer les courants prévus.

2. Procédé selon la revendication 1, **caractérisé en ce que** l'adressage de tous les abonnés (1 à 4) du groupe des abonnés (1 à 4) non encore adressés s'effectue dans plusieurs cycles d'adresses.

3. Procédé selon la revendication 2, **caractérisé en ce que** la période de mise sous tension (T) est réduite de cycle d'adresse en cycle d'adresse.

4. Procédé d'adressage des abonnés d'un système de bus qui comprend :

a) une ligne de bus (12)

b) plusieurs abonnés (1 à 4) reliés à la ligne de bus (12), dont chacun présente un détecteur (22) pour détecter une circulation du courant entre cet abonné (1 à 4) et l'abonné (1 à 4) directement adjacent à celui-ci, un commutateur commandable (26) pour établir une connexion de la ligne de bus (12) avec un potentiel de référence, une unité de commande (24) pour mise sous tension et hors tension du commutateur (26), entre autres sur la base du signal de sortie du détecteur (22), et une mémoire d'adresse, dans lequel, en outre,

c) pour chaque abonné (1 à 4) le commutateur commandable (26), en plus d'un commutateur (50) nécessaire à la communication de bus, est intégré dans le système,

d) une résistance (30) d'une unité de commande centrale (14), intervenant dans le procédé, en plus d'une autre résistance (51) nécessaire à la communication de bus, qui peut être disposée dans l'unité de commande centrale (14), est intégrée dans le système,

e) la résistance (30) intervenant dans le procédé est formée par un commutateur nécessaire à la communication de bus, lequel peut être commandé,

f) le commutateur commandable (26) de chaque abonné (1 à 4) présente une résistance (27) définie, pratiquement identique ou un comportement de source de courant (27) pratiquement identique pour tous les abonnés (1 à 4),

procédé dans lequel

g) les unités de commande (24) de tous les abonnés (1 à 4) du groupe d'abonnés (1 à 4) non encore adressés mettent sous tension les commutateurs (26) pour une période de mise sous tension (T) prédéterminable,

h) au cours de la période de mise sous tension (T) sont ouverts les commutateurs (26) des abonnés (1 à 4) dont les détecteurs (22) détectent une circulation de courant vers l'abonné (1 à 4) respectivement voisin,

i) le commutateur (26) de l'un des abonnés (1 à 4) étant encore ouvert lors de l'écoulement de la période de mise sous tension (T) et

j) une adresse étant stockée dans la mémoire d'adresse de cet abonné (1 à 4) et cet abonné (1 à 4) étant ainsi adressé,

k) l'activation des commutateurs commandables (26, 27) de tous les abonnés (1 à 4) est réalisée simultanément,

l) l'activation des commutateurs commandables (26, 27) de tous les abonnés (1 à 4) conduit à une montée des courants dans les éléments (27) déterminant le courant des commutateurs commandables (26, 27), le courant total sur la ligne (12) augmentant également,

m) la désactivation des commutateurs commandables (26, 27) de tous les abonnés (1 à 4) est initiée directement ou avec temporisation par la réponse du détecteur (22), le courant total de tous les abonnés (1 à 4) étant réduit par l'absence de charge de cet abonné (1 à 4), et

n) ce processus de désactivation se déroulant sous forme de réaction en chaîne en commençant par l'abonné (1) directement adjacent à l'unité de commande centrale (14),

**caractérisé en ce que**

o) le courant total sur la ligne (12) augmente du fait de l'excitation des commutateurs commandables (26, 27), mais est en même temps réduite graduellement par les processus de désactivation déclenchés par les détecteurs (22), le courant total restant ainsi limité,

p) l'intensité de courant maximale admissible de la résistance ou source de courant (30), intervenant dans le procédé, de l'unité centrale de commande (14) est toujours plus élevée que la somme des courants instantanés des commutateurs commandables (26, 27) de tous les abonnés (1 à 4) et les commutateurs commandables (26, 27) de tous les abonnés restent en mesure d'appliquer les courants prévus.

5. Procédé selon l'une des revendications 1 à 4, **ca-**

**ractérisé en ce qu'**une ou plusieurs unités de commande centrale (14) sont reliées à la ligne de bus (12) et qu'au moins l'une de ces unités de commande centrales (14) initie la fermeture des commutateurs (26) de tous les abonnés (1 à 4) du groupe d'abonnés (1 à 4) non encore adressés.

6. Procédé selon l'une des revendications 1 à 5, **caractérisé en ce que** les unités de commande (24) de tous les abonnés (1 à 4), à des fins de synchronisation de la fermeture des commutateurs (26) pour la période de mise sous tension (T), ferment les commutateurs (26) de tous les abonnés (1 à 4) pendant un laps de temps prédéterminé (T1), puis les ouvrent à nouveau, l'ouverture du dernier commutateur (26) étant identifiée et cet instant étant l'instant de synchronisation (T2), et après écoulement d'un laps de temps supplémentaire (T3), tous les commutateurs (26) étant fermés de manière synchronisée pour la période de la période de mise sous tension (T).

7. Procédé selon l'une des revendications 1 à 6, **caractérisé en ce que** les détecteurs (22) sont montés en série dans la ligne de bus (12) et **en ce que** le commutateur (26) de chaque abonné (1 à 4) est disposé dans une ligne de connexion (28) qui dérive de la ligne de bus (12) en amont du détecteur (22) de cet abonné (1 à 4), vu de l'unité de commande centrale (14).

8. Procédé selon l'une des revendications 1 à 7, **caractérisé en ce que** tous les abonnés (1 à 4) à l'exception de l'abonné (1 à 4) relié à la ligne de bus (12) et le plus éloigné de l'unité de commande centrale (14), présentent chacun un détecteur (22).

9. Procédé selon l'une des revendications 1 à 8, **caractérisé en ce que** chaque détecteur (22) présente une résistance de dérivation (16) et un comparateur (18) pour comparer la chute de tension ($U_s$) à travers la résistance de dérivation avec une valeur de référence ($V_{ref}$).

10. Procédé selon la revendication 9, **caractérisé en ce qu'**un préamplificateur (20) est monté en amont du comparateur (18) pour amplifier la chute de tension ($U_s$).

11. Procédé selon la revendication 9 ou 10, **caractérisé en ce qu'**un convertisseur analogique/numérique est monté en aval de la résistance de dérivation (16).

12. Procédé selon la revendication 11, **caractérisé en ce que** le comparateur est un comparateur numérique.

13. Procédé selon l'une des revendications 9 à 12, **caractérisé en ce que** la résistance de dérivation (16) est intégrée dans la ligne (12), seule la détection de la chute de tension ayant lieu dans l'abonné (1 à 4) respectif.

14. Procédé selon l'une des revendications 9 à 12, **caractérisé en ce que** la résistance de dérivation (16) est intégrée dans chaque abonné (1 à 4) et que la détection du courant s'effectue totalement dans chaque abonné (1 à 4).

15. Procédé selon l'une des revendications 9 à 12, **caractérisé en ce que** la résistance de dérivation est intégrée dans une connexion enfichable entre la ligne de bus (12) et l'abonné (1 à 4) et que la mise en oeuvre d'une résistance (16) n'est nécessaire ni dans la ligne ni à l'intérieur de l'abonné (1 à 4).

16. Procédé selon l'une des revendications 9 à 11, **caractérisé en ce que** la résistance de dérivation à l'intérieur de chaque abonné (1 à 4) est intégrée dans un composant semi-conducteur déjà existant.

17. Procédé selon l'une des revendications 9 à 12, **caractérisé en ce que** la résistance de dérivation (16) à l'intérieur de chaque abonné (1 à 4) est intégrée dans un composant semi-conducteur déjà existant et est formée par câblage interne.

18. Procédé selon l'une des revendications 1 à 12, **caractérisé en ce que**, dans le cas des systèmes de bus dans lesquels chaque abonné (1 à 4) contient un pull-up ou pull-down (41) supplémentaire sous la forme d'une résistance ou d'une source de courant, celui-ci peut être désactivé par le commutateur (40) pour adressage par l'unité de commande (24).

19. Procédé selon l'une des revendications 1 à 12, **caractérisé en ce que** des diodes de protection contre l'inversion de polarité (31, 41, 54) sont insérées dans certains ou dans tous les abonnés (1 à 4).

20. Procédé selon l'une des revendications 1 à 12, **caractérisé en ce que** le système de bus à un/des emplacement(s) quelconque(s) présente des abonnés qui ne participent pas au processus d'adressage.

21. Procédé selon l'une des revendications 1 à 12, **caractérisé en ce que** la ligne de bus (12) est acheminée au moyen d'une ligne de rétroaction des deux côtés de l'unité de commande centrale (12).

22. Procédé selon la revendication 21, **caractérisé en ce que** les modules (51, 52, 30) de l'unité de commande centrale (14) sont, optionnellement, réalisés en double de façon que les deux côtés de la ligne de bus (12) puissent être desservis, à des fins d'analyse ou en cas de défaillance, par l'unité de commande centrale (14).

**23.** Procédé selon la revendication 21, **caractérisé en ce qu'**à partir de la ligne de rétroaction du faisceau de câbles principal est établie une connexion avec la ligne de bus (12) précisément d'un faisceau de câbles secondaire, tous les abonnés dans le faisceau de câbles secondaire étant situés électriquement après le dernier abonné du faisceau de câbles principal, vu du côté de l'unité de commande centrale.

**24.** Procédé selon la revendication 21 et 23, **caractérisé en ce que** le faisceau de câbles secondaire possède également une ligne de rétroaction, et qu'une connexion est établie avec la ligne de bus (12) précisément d'un autre faisceau de câbles secondaire, le procédé pouvant se poursuivre à volonté et des harnais de câbles arborescents pouvant être constitués malgré un agencement électrique séquentiel des abonnés.

**25.** Procédé selon l'une des revendications 1 à 24, **caractérisé en ce que** le potentiel de référence pour le commutateur (26) de chaque abonné est la tension d'alimentation (VDD1) de celui-ci.

**26.** Procédé selon l'une des revendications 1 à 25, **caractérisé en ce que** le procédé est réalisé non pas sur la ligne de bus (12) mais sur une ligne spécialement prévue pour l'adressage.

**27.** Procédé selon l'une des revendications 1 à 25, **caractérisé en ce que** le procédé est réalisé non pas sur la ligne de bus (12) mais sur une ligne sous tension d'alimentation (VDD2), et par conséquent que, dans l'unité de commande centrale (14), la résistance ou la source de courant (30) peut être remplacée par une connexion conductrice.

**28.** Procédé selon l'une des revendications 1 à 27, **caractérisé en ce que** la polarité est quelconque entre les lignes sous tension d'alimentation (VDD1, VDD2).

**29.** Procédé selon l'une des revendications 1 à 28, **caractérisé en ce que** le procédé s'applique à un fil d'un système de bus multifilaire.

**30.** Procédé selon l'une des revendications 1 à 29, **caractérisé en ce que** le procédé s'applique à des systèmes de bus multifilaires, et que les commutateurs commandables (26) ainsi que les éléments (27) déterminant le courant de chaque abonné (1 à 4) sont reliés non pas au potentiel de référence mais à une deuxième ligne de bus, procédé dans lequel l'unité de commande centrale met cette deuxième ligne de bus à un potentiel de référence, VDD1, par l'intermédiaire d'un commutateur à courant limité ou d'une résistance connectée.

**31.** Procédé selon la revendication 30, **caractérisé en ce que** les deux lignes de bus utilisées sont pourvues de détecteurs de courant (22) et analysées.

**32.** Procédé selon l'une des revendications 1 à 31, **caractérisé en ce que** les structures nécessaires à la communication de bus sont utilisées dans les abonnés pour réaliser le procédé d'adressage.

**33.** Procédé selon l'une des revendications 1 à 32, **caractérisé en ce que**, dans le cas des systèmes de bus dans lesquels chaque abonné (1 à 4) contient un pull-up ou un pull-down supplémentaire (41) sous la forme d'une résistance ou d'une source de courant, celui-ci peut être désactivé par le commutateur (40) pour adressage par l'unité de commande (24).

**34.** Procédé selon l'une des revendications 1 à 33, **caractérisé en ce que** des diodes de protection contre l'inversion de polarité (31, 41, 54) sont insérées dans certains ou dans tous les abonnés (1 à 4).

Fig.1

EP 1 603 282 B1

Abb. 2

Fig.2

EP 1 603 282 B1

Abb.3   Nutzung der erfingungsgemässen Strukturen zur Buskommunikation

Fig.3

Abb.4   Nutzung der erfingungsgemässen Strukturen zur Buskommunikation

Fig.4

Abb. 5 : 4-Draht Leitung

Fig. 5

Abb. 6 : 4-Draht Leitung

Fig.6

EP 1 603 282 B1

VDD1

Zentralsteuereinheit

Referenz-potential

Referenz-potential

Verpol-diode optional

Verpol-diode optional

Verpol-diode optional

Verpol-diode optional

Us   Uref

Us   Uref

Teilnehmer

Teilnehmer

VDD2

Abb. 7 : auf VDD2 Versorgungsleitung

# Fig.7

Abb. 8 : auf VDD2 Versorgungsteilung

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10147512 A1
- EP 0854609 A1
- DE 19647668 A1
- DE 4404962 C2
- DE 4428502 A1
- WO 9745983 A1
- DE 19756564 A1
- DE 4038992 C2